# EUROPEAN PATENT APPLICATION

(11) **EP 0 874 368 A2**
(43) Date of publication of application: **28.10.1998**
(21) Application number: 98107274.7
(22) Date of filing: 21.04.1998
(51) Int. Cl.: G11B 27/031, G11B 27/32, G11B 27/10, G11B 20/10, G11B 20/12, G11C 7/00

(54) **Information recording apparatus and method, and information reproducing apparatus and method**

(30) Priority: 25.04.1997 JP 109784/97
(71) Applicant: SONY CORPORATION, Tokyo (JP)
(72) Inventor: Haneda, Naoya, Shinagawa-ku, Tokyo (JP)
(74) Representative: Melzer, Wolfgang, Dipl.-Ing.

(57) **Abstract**

A information recording system is disclosed which comprises a recording medium in which information can be written, file managing means of managing, in units of a file, the information recorded in the recording medium, a block managing means of managing the files in predetermined units forming each file (unit of management), and a recording medium controlling means for controlling the recording medium on the basis of the file and block managing means, the recording medium controlling means writing the information in units (unit of controlling) formed from an arbitrary number of units of management, and recording file management information and block management information into the file and block managing means, respectively. The recording medium is adapted to manage information in units larger than those in which information is written. The recording medium is formed from a plurality of recording medium chips. The chips can be controlled at a higher speed and with a high flexibility and the memory area in the recording medium can be used effectively and efficiently.

## Description

### BACKGROUND OF THE INVENTION

### Field of the Invention:

The present invention relates to an information recording apparatus and method in which information is managed and information write is controlled, and an information reproducing apparatus and method in which information is managed and information read is controlled, all with respect to a recording medium adapted to manage information in units larger than those in which information is written.

### Description of Related Art:

The Japanese Published Unexamined Patent Application Nos. 6-131371, 6-215010 and 6-301601 of the Inventor of the present invention disclose apparatuses adapted to provide a variety of information such as sounds, images, characters, programs, etc. by transferring them from an information provider apparatus (transfer apparatus) to an information recording apparatus or an information recording/reproducing apparatus incorporating a semiconductor memory or the like.

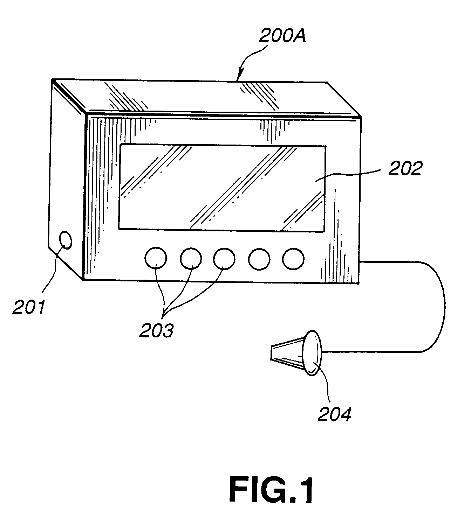

FIG. 1 is a sketch of a conventional information recording/reproducing apparatus disclosed in the above-mentioned Japanese Published Unexamined Patent Applications. The information recording/reproducing apparatus is generally indicated with a reference numeral 200A. It has a connector 201 for connection to an information provider apparatus (not illustrated), through which an information can be copied from the information provider apparatus into a recording medium incorporated in the information recording/reproducing apparatus 200A. The recording medium is not limited to any special type but should desirably be capable of copying fast, allow an easy random access and have an easy portability.

The information recording/reproducing apparatus 200A is provided with a display 202 which display characters, images or the like thereon, and function selectors 203. The information recording/reproducing apparatus 200A displays on the display 202 information recorded in the recording medium on the display 202. Thus, the user of the apparatus can selectively reproduce a desired information from the recording medium by using an appropriate one of the function selectors 203.

Information provided from the information provider apparatus include text information, audio information, video information, computer programs, etc. Such information are not limited to any special kind. It should be noted that "reproduction" of a computer program referred to herein means "execution" of the program. The user of this apparatus can enter an information as necessary for reproduction of the program. Also when a signal thus reproduced is a text or video information, it can be displayed on the display 202 which is a liquid crystal display, for example. Further, when the reproduced signal is an audio information, it can be delivered through an earphone 204. Note that a speaker (not illustrated) may be used in place of, or in addition to, the earphone 204 and that a reproduced signal output terminal may be provided for connection to an external display, speaker or the like.

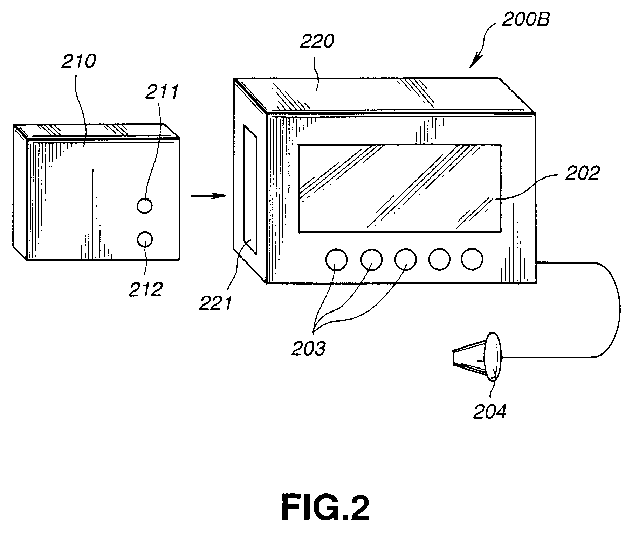

FIG. 2 is a sketch of another conventional information recording/reproducing apparatus disclosed in the aforementioned Japanese Published Unexamined Patent Applications. As shown in FIG. 2, the information recording/reproducing apparatus generally indicated with a reference numeral 200B is a version of the information recording/reproducing apparatus 200A split into an information recording apparatus 210 and information reproducing apparatus 220. The information reproducing apparatus 220 has an insert/rejection slot 221 through which the information recording apparatus 210 can be inserted into the information reproducing apparatus 220. Information can be transmitted from the information recording apparatus 210 to the information reproducing apparatus 220 where it will be reproduced.

Namely, for this information reproduction, data and control signal should be transferred between the information recording apparatus 210 and information reproducing apparatus 220. So the information recording apparatus 210 is provided with a connector 212 for connection to the information reproducing apparatus 220 while the information reproducing apparatus 220 is provided with a connector corresponding to the connector 212. Thus, when the information recording apparatus 210 is set in the information reproducing apparatus 220, both the connectors are connected to each other.

The information recording apparatus 210 is also provided with a connector 211 for connection to an information provider apparatus in addition to the connector 212 for connection to the information reproducing apparatus 220. However, a single connector may be provided instead of the two and used by switching it for an intended purpose, namely, for connection to either an information provider apparatus or the information reproducing apparatus 220.

The information recording apparatus 210 may be formed only from a recording medium. Owing to this structure, the information recording apparatus 210 can be made compact and lightweight for easy portability. In this case, read or write of information into or from the recording medium is controlled from the information reproducing apparatus 220 or information provider side.

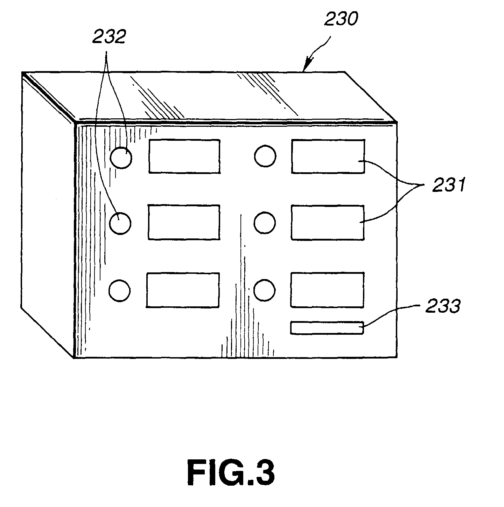

FIG. 3 is also a sketch of a conventional information provider apparatus disclosed in the aforementioned Japanese Published Unexamined Patent Applications. As shown in FIG. 3, the information provider apparatus generally indicated with a reference numeral 230 is provided with a display 231 to display the information the apparatus 230 can provide, prices for the service of information providing, etc. and output selectors 232 by which the user can select a desired information. For copying a desired information to the information recording apparatus 210 from the information provider apparatus 230, the user inserts the information recording apparatus 210 into an insert/ejection slot 233 of the information provider apparatus 230, and selects the desired information by using an appropriate one of the output selectors 232 while referring to various information displayed on the display 231. Also, such information can be thus copied by connecting a connector provided at the information provider apparatus 230 to the connector 201 of the information recording/reproducing apparatus 200A having been described with reference to FIG. 1 above.

The information provider apparatus 230 has a recording medium in which information to be provided are stored and an information copying controller (not illustrated) adapted to read an information the user wants and to write the read information into the information recording apparatus 210 or information recording/reproducing apparatus 200A. It should be noted that the information provider apparatus 230 may be connected to an information provider center (not illustrated) or the like over a cable or radio linkage to provide an information the user wants. In this case, no recording medium may be provided in the information provider apparatus 230. In case a recording medium is provided in the information provider apparatus 230, latest information can be provided at reduced costs of communications by updating the information stored in the recording medium through communications with the information provider apparatus over a communications linkage.

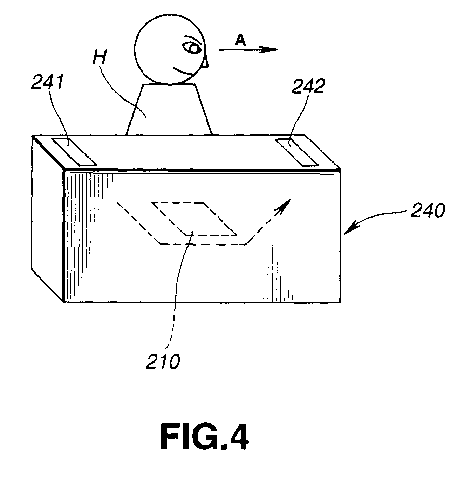

FIG. 4 is a sketch of a further information provider apparatus disclosed in the aforementioned Japanese Published Unexamined Patent Applications. As shown in FIG. 4, the information provider apparatus generally indicated with a reference numeral 240 is provided with an inlet 241 and outlet 242 for the information recording apparatus 210. The inlet 241 and outlet 242 are disposed spaced from each other. Specifically, the information provider apparatus 240 is provided with a means (not illustrated) of conveying the information recording apparatus 210 inserted through the inlet 241. The inserted information recording apparatus 210 is carried by the conveying means to a copying post where a selected information is copied to the information recording apparatus 210, and then brought by the conveying means from the copying post to the outlet 242. The information recording apparatus 210 is ejected out from the outlet 242. Thus, a person H to be provided with an information in this way walks in the direction of arrow A and receives the information copied into his or her information recording apparatus 210. The information provider apparatus 210 is thus able to provide information rapidly to many people.

The recording medium used in the information recording/reproducing apparatus and which should be easily portable may preferably be a non-volatile memory which has not to be backed up by a battery. Such a non-volatile memory is advantageously usable since an information once recorded in the non-volatile memory will not be missing or destroyed. The non-volatile memory may be, for instance, an EEPROM (Electrically Erasable and Programmable ROM) referred to in the article "32-megabit NAND type flash memory" by Iwata et al in the journal "Electronic Materials" (June, 1995, pp. 32-37).

Furthermore, the specification and drawings of the Japanese Patent Application No. 8-228966 of the Inventor of the present invention disclose a method of file management for a recording medium in which data are erased in larger units (will be referred to as "block" hereafter) than those in which data are written (will be referred to as "page" hereafter). In this method of file management, all files including partitioned files are recorded starting at the leading address of a block, while when a recording medium (will be referred to as "memory" hereafter) is composed of a plurality of recording medium chips (for example, semiconductor chip) (which will be referred to as "memory chip" hereafter), all the files are recorded starting at a logically leading one of the memory chips regularly and vertically or longitudinally of the memory.

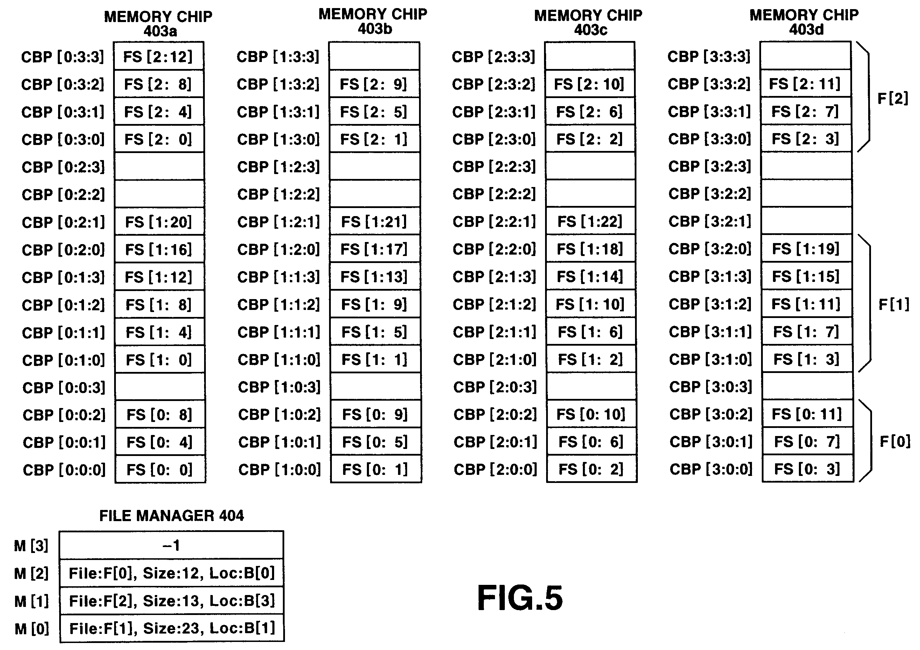

FIG. 5 shows files recorded in a plurality of memory chips forming together a memory and a file managing means (will be referred to as "file manager" hereafter). For simplicity of the explanation, an example is taken in which a memory 403 consists of four memory chips 403a, 403b, 403c and 403d for four pages, respectively, of a block. As mentioned above, a block is a unit of data erasing, and a page is a unit of data writing.

It is assumed here that a physical address in the memory 403 is conveniently expressed with three units "C"(Chip), "B"(Block) and "P"(Page). The "C", "B" and "P" correspond to a memory chip No. c, block No. b being a minimum unit of data erasing, and to a page No. p being a minimum unit of data writing, respectively. Thus one address in the memory 403 is represented by CBP[c:b:p]. For better understanding of the correspondence with the FAT (File Allocation Table) file system, for example, the storage capacity per page is assumed to be 512 bytes, which is equal to that of one sector adopted in the FAT system. Also, for identification of each data to be recorded into the memory, two units F (File) and S (Sector) will be used. The F and S correspond to a file No. f and a number s for each of sectors which form together a file, respectively. Thus, one data is represented by FS[f:s].

In this example, each of the memory chips C[0], C[1], C[2] and C[3] consists of four blocks B[0] to B[3] each of which consists of four pages P[0] to P[3] as will be seen from FIG. 5.

The file manager 404 has recorded and stored in blocks M[0] to M[m-1] thereof where m is a maximum number of files that can be managed by the file manager 404, a name (File) or No., size (Size) and leading address (Loc) of each file recorded in the memory 403, and manage the logical order of the files. It should be noted that a value "-1" written in the file manager 404 shown in FIG. 5 means an invalid file management data.

Thus, in the example shown in FIG. 5, data in sectors of each file are recorded over the four memory chips 403a, 403b, 403c and 403d in this order, and the file manager 404 indicates that three files are recorded in the memory 403 and their logical order is F[1], F[2] and F[0]. The file F[1] is recorded over twenty three sectors from a leading address CBP[0:1:0] of a block B[1], the file F[2] is over thirteen sectors from a leading address CBP[0:3:0] of a block B[3], and the file F[0] is over twelve sectors from a leading address CBP[0:0:0] of a block B[0].

Rewriting of the file F[1], for example, in the example shown in FIG. 5 will be described below:

First, addresses of blocks forming the file F[1] should be recognized for erasing operation. It is already known that the memory 403 is composed of four chips each of which contains four pages per block. It is recognizable from the file manager 404 that the file F[1] has a size of twenty three sectors counted from a leading address CBP[0:1:0] of the block B[1]. Namely, since it is known that the file F[1] is composed of eight blocks over four memory chips, blocks CB[0:1], CB[1:1], CB[2:1], CB[3:1], CB[0:2], CB[1:2], CB[2:2] and CB[3:2] will be erased. Upon completion of the erasure of the file F[1], write of a fresh file will starts. In this example, sector data FS[1:0], FS[1:1], FS[1:2], FS[1:3], FS[1:4], ... , FS[1:22] will be written in this order over the four memory chips 403a, 403b, 403c and 403d as seen from FIG. 5.

Also, data will be read out in quite a same order as that in the above-mentioned writing of the sector data. For reading the file F[1], for instance, it is recognizable from the file manager 404 that the file F[1] has a size of twenty three sectors counted from the leading address CBP[0:1:0]. So, sector data FS[1:0], FS[1:1], FS[1:2], FS[1:3], FS[1:4], ... , FS[1:22] will be read out in this order vertically from the four memory chips as seen from FIG. 5.

If more than one file exist in a same block, only ones of them necessary for rewriting have to be saved into a separate area. However, since only files of one kind exist in a same block in the above-mentioned method, no complicated operation is required for data rewrite. Also, even if a memory is composed of a plurality of memory chips, all files can be managed just through file management of a logically leading memory chip alone. In other words, although the unit of file writing is one page, a simple file management and high speed write control are accomplished by using, as a unit of file management, four blocks regularly extending over four memory chips.

The recorded status of files and file manager 404 in the example shown in FIG. 5 allow a parallel control of memory chips and simple file management when the above-mentioned conditions that only files of one kind should be recorded in a same block and a plurality of memory chips be controlled in a regular order, are met.

In the example shown in FIG. 5, the file F[1] is recorded over the eight blocks; however, since the size of the file itself is of twenty three sectors, the storage of the file needs only six blocks. Similarly, storage of the file F[0] needs only twelve sectors which is equivalent to three blocks, but it is recorded over four blocks. In this recording system, it is likely that empty pages are available in the memory 403 while less empty blocks are available there.

The above also means that more blocks have to be erased for file rewrite.
Thus, a longer time is required for erasure of the blocks than for erasing files written as justified in each block and over blocks. On the other hand, however, if each sector data in a file is recorded as sequentially justified in each block and over blocks, it becomes difficult to control memory chips in parallel or simultaneously, so that files cannot be rewritten at a higher speed.

Therefore, the above problems have to be solved by making it possible to rewrite files at a high speed through parallel control of memory chips while making a space area available for recording fresh files through minimization of empty pages possibly taking place.

In the aforementioned technique, a plurality of blocks regularly recorded longitudinally over a plurality of memory chips is taken as a unit of management in the file manager. Thus, if file write or erase becomes impossible due to an excessive number of times that any of the plurality of blocks is rewritten, all the blocks included in a unit of management will be taken as invalid irrespective of the other valid ones included in the unit of file management. As file rewrite is repeatedly done, a file is likely to have a moth-eaten pattern of dispersed space areas.

However, the above-mentioned file manager is adapted to determine the recorded status of all files through detection of the leading addresses and capacities of the files regularly written over a plurality of memory chips. Therefore, it cannot manage files recorded in dispersed space areas.

Therefore, it has been required to provide a file manager capable of manage files recorded dispersedly in arbitrary blocks.

### SUMMARY OF THE INVENTION

Accordingly, the present invention has an object to overcome the above-mentioned drawbacks of the prior art by providing an information recording apparatus and method, and an information reproducing apparatus and method, capable of a rapid and flexible parallel control, and an effective use of memory area, of a plurality of recording medium chips of a recording medium adapted to manage information in a larger unit than a unit of writing.

The above objet can be accomplished by providing an information recording apparatus, comprising, according to the present invention, a recording means in which information can be recorded; a file managing means of managing, in units of a file, the information recorded in the recording medium; a block managing means of managing the files in units of a predetermined block formed from a plurality of units of writing; and a controlling means for writing information into the recording means in units of a parallel block including an arbitrary number of the predetermined blocks, setting a file management information into the file managing means, and setting in the block managing means a block management information including a flag indicating a punctuation between the blocks included in the parallel block.

The above object can also be accomplished by providing an information recording method, comprising, according to the present invention, the steps of writing information into a recording means in units of a parallel block including a plurality of blocks; setting into a file managing means a file management information under which the information recorded in the recording means is to be managed in units of a file; and setting in a block managing means block a management information including a flag indicative of a punctuation between the parallel blocks and under which the files are to be managed in units of a predetermined block including a plurality of units of writing.

Also, the above object can be accomplished by providing an information reproducing apparatus, comprising, according to the present invention, a recording means in which information is recorded; a file managing means for managing, in units of a file, the information recorded in the recording medium; a block managing means for managing the files in units of a predetermined block including a plurality of units of reading; and a controlling means for reading information from the recording means on the basis of the file and block managing means and in units of a parallel block including an arbitrary number of the predetermined blocks.

The above object can yet also be accomplished by providing an information reproducing method, comprising, according to the present invention, the steps of recognizing a file management information under which information recorded in a recording means is to be managed in units of a file; recognizing a block management information including a flag indicative of a punctuation between blocks included in a parallel block and under which the files are to be managed in units of a predetermined block including a plurality of units of writing; and reading information from the recording means in units of a parallel block including an arbitrary number of the predetermined blocks.

In the above-mentioned information recording apparatus formed from a recording medium such as a flash memory and adapted to manage information in larger units than those in which information is written and method for the information recording, and apparatus and method for reproducing the information from such a recording medium, information recorded in the information-writable recording medium is managed in units of a file and the information is further managed in predetermined units (unit of management) forming together each file, and the recording medium is controlled based on these managements of information. During the control of the recording medium, the information is read or written in a unit (units of controlling) including an arbitrary number of the predetermined units while a file management information and block management information are being recorded, thereby enabling the effectively use of the memory area and the rapid and flexible parallel control of the recording medium.

### BRIEF DESCRIPTION OF THE DRAWINGS

These objects and other objects, features, aspects and advantages of the present invention will become more apparent from the following detailed description of the preferred embodiments of the present invention when taken in conjunction with the accompanying drawings, of which:
FIG. 1 is a sketch of a conventional information recording/reproducing apparatus;
FIG. 2 is a sketch of another conventional information recording/reproducing apparatus;
FIG. 3 is a sketch of a conventional information provider apparatus;
FIG. 4 is also a sketch of another conventional information provider apparatus;
FIG. 5 is an explanatory drawing of an example of file record (memory map) in the conventional information recording/reproducing apparatus;
FIG. 6 is a schematic block circuit diagram of an embodiment of information recording/reproducing apparatus according to the present invention;
FIG. 7 is a memory map for explanation of the file recording method adopted in the embodiment of information recording/reproducing apparatus according to the present invention;
FIG. 8 is an explanatory drawing of a file managing method adopted in the embodiment of information recording/reproducing apparatus according to the present invention;
FIG. 9 is an explanatory drawing of another file managing method adopted in the embodiment of information recording/reproducing apparatus according to the present invention;
FIG. 10 is a flow chart of operations in a former half of a file writing procedure in the embodiment of information recording/reproducing apparatus according to the present invention;
FIG. 11 is a flow chart of operations to be done when a space area is available during a file writing procedure in the embodiment of information recording/reproducing apparatus according to the present invention;
FIG. 12 is a flow chart of operations in a former half of a file erasing procedure in the embodiment of information recording/reproducing apparatus according to the present invention;
FIG. 13 is a flow chart of operations to be done in a latter half of a file erasing procedure and when no space area is available for writing in the embodiment of information recording/reproducing apparatus according to the present invention;
FIG. 14 is a flow chart of operations in a former half of a file reading procedure in the embodiment of information recording/reproducing apparatus according to the present invention;
FIG. 15 is a flow chart of operations when transfer is designated in a file reading procedure in the embodiment of information recording/reproducing apparatus according to the present invention; and
FIG. 16 is a flow chart of operations when reproduction is designated in a file reading procedure in the embodiment of information recording/reproducing apparatus according to the present invention.

### DETAILED DESCRIPTION OF THE PREFERRED EMBODIMENTS

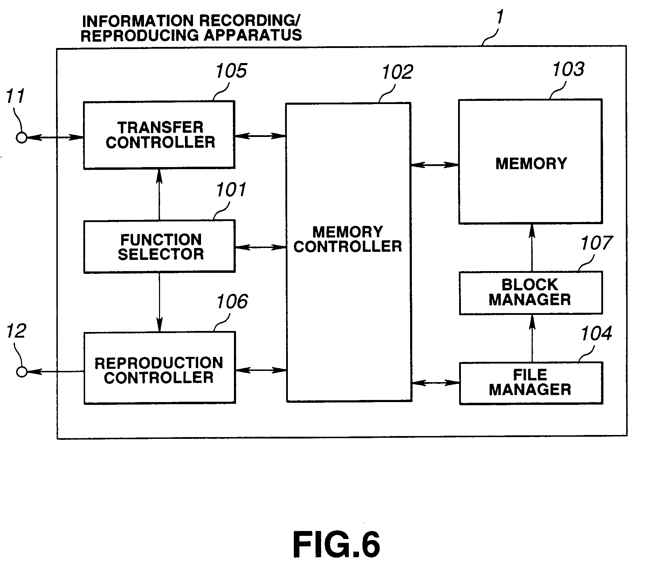

FIG. 6 is a schematic block diagram showing the entire configuration of the information recording/reproducing apparatus according to the present invention.

As shown in FIG. 6, the information recording/reproducing apparatus according to the present invention is generally indicated with a reference numeral 1. It comprises a function selector 101 by which the user of the apparatus 1 can select and enter a desired one of recording, reproducing and other functions, a recording medium (will be referred to as "memory" herein after) 103 formed from a plurality of recording medium chips (will be referred to as "memory chip" hereinafter), a file managing means (will be referred to as "file manager" hereinafter) 104 to provide files recorded in the memory 103, a block managing means (will be referred to as "block manager" hereinafter) 107 to manage the recorded status and validity of data in the memory 103, a memory controlling means (will be referred to as "memory controller" hereinafter) 102 to control file reading, writing and erasing with respect to the memory 103 on the basis of the file and block managers 104 and 107, a transfer controlling means (will be referred to as "transfer controller" hereinafter) 105 to control data entry to the apparatus 1 or data output from the apparatus 1 via a transfer input/output terminal 11, and a reproduction controlling means (will be referred to as "reproduction controller" hereinafter) 106 to reproduce a file recorded in the memory 103 and deliver it at a reproduced information output terminal 12. It should be appreciated that each of the components as the "means" is a software which can be executed by hardware including a circuit, physical machine, CPU (Central Processing Unit) or the like.

When the function selector 101 is set to write into the memory 103 a file transferred from the transfer input/output terminal 11, the memory controller 103 will first have the block manager 107 search a space area in the memory 103. When a space area is found available, the transfer controller 105 will run a downward transfer protocol which will be described later to acquire the input data, and then the memory controller 102 will run an upward transfer protocol which will also be described later to write the input data as a file into the memory 103. At this time, the memory controller 102 will record (or set) a file management information and block management information corresponding to the written file into the file manager 104 and block manager 107, respectively, as will be further described later.

It should be noted that the above-mentioned downward transfer protocol may be a one conforming to the standardized one including a physical layer defined in such Standards ANSI X3. 131-1986 so-called SCSI (Small Computer System Interface) IEEE 1394, PCMCIA (Personal Computer Memory Card International Association), etc.. Adoption of such a standardized interface will allow to realize a more versatile application of the information recording/reproducing apparatus 1.

Also, the memory controller 102 should desirably be able to control the memory 103 without impairing the data transfer capability of the transfer controller 105. That is, since the data transfer capability of the entire information recording/reproducing apparatus 1 depends upon the transfer control capability of the transfer controller 105 or the memory control capability of the memory controller 102, whichever is lower, so a transfer controller and a memory controller, which will enable an efficient data transfer, are indispensable for the information recording/reproducing apparatus 1. Such an upward transfer protocol effected by the memory controller 102 will enable a rapid write of a file into the memory 103 by using a method disclosed in the Japanese Published Unexamined Patent Application No. 7-200181 of the Inventor of the present invention, titled "Information Transferring Means and Information Recording Means". Namely, the memory controller 102 will provide a parallel data write into a plurality of memory chips forming together the memory 103 as will be described below.

In case the memory 103 composed of a plurality of memory chips is formed from an NAND type flash memory, for instance, a chip select signal is given to a memory chip into which data is to be written, and then a command for serial data entry is entered . Next, an address to which the data is to be written is entered, and a data for one page, namely, of 512 bytes, is transferred from the transfer controller 105 to an internal register of the selected memory chip. Finally, a write command is entered. The data of 512 bytes will be written from the internal register into a memory cell. After the lapse of a predetermined time, writing of the one page will be complete.

Here the memory controller 102 will sequentially enter a similar command, address and data into another memory chip without waiting for the lapse of the predetermined time. Upon completion of the write of all data forming together one file, the file and block information are updated in the file and block managers 104 and 107, respectively.

The above procedure has been described on the assumption that data at an address at which another data is to be written has been erased prior to the data write. A procedure which is to be done when the data has not been erased will be described later.

On the other hand, when the function selector 101 is set to read a file recorded in the memory 103 and transfer it to the transfer input/output terminal 11, the user of the apparatus 1 designates first a file to be transferred by referring to a display (not illustrated) on which management information based on the status of the file manager 104 is displayed. Thus, the memory controller 102 will retrieve management information for the designated file from the file and block managers 104 and 107 to recognize the address and size of the designated file. Next, the memory controller 102 will run the upward transfer protocol to read data forming the designated file. Then, the transfer controller 105 will run the downward transfer protocol, so that the designated file will be delivered at the transfer input/output terminal 11.

Also in this case, the memory controller 102 should desirably be able to control the memory 103 in such a manner as not to impair the data transfer capability of the transfer controller 105. So the upward transfer protocol is such that similarly to the above-mentioned data writing procedure, parallel data reading will be done as in the following:

First, a chip select signal is given to a memory chip from which data is to be read, and then a read command is entered. Then, an address from which the data is to be read is entered, so that a data for one page, namely, of 512 bytes will be read from a memory cell at the address into the internal register of the memory chip, and in a predetermined time, the reading into the register will be complete. Finally, the data is transferred to the transfer controller 105. Here the reading of the one page of data is completed.

However, the memory controller 102 can read data at a higher speed by entering a similar command and address in parallel into another memory chip as well without waiting for the lapse of a predetermined time necessary for the data reading into the register.

On the other hand, when the function selector 101 is set to read a data recorded in the memory 103, reproduce and deliver it to the above-mentioned reproduced information output terminal 12, the user of the apparatus 1 designates first a file to be reproduced and delivered by referring to a display (not illustrated) on which management information based on the status of the file manager 104 is displayed. Thus, the memory controller 102 will retrieve a management information on the designated file from the file and block managers 104 and 107 to recognize the address and size of the designated file. Next, as in the operations of transfer and delivery, the memory controller 102 will run the upward transfer protocol to read the data forming the designated file. Then, the reproduction controller 106 will reproduce the data read out by the memory controller 102 and then deliver the reproduced data at the reproduced information output terminal 12.

However, if no high speed of reading is required, no parallel control of the memory chips is effected in the upward transfer protocol so that the power consumption by the apparatus 1 can be minimized.

The above data reproduction depends the kind of information recorded in the memory. If the information is a one having been encoded in any manner, it will be decoded in an appropriate manner. When a file read out from the memory 103 is a one having been encoded by an algorithm conforming to the so-called MPEG (Moving Picture Experts Group) Standard, for example, the reproduction controller 106 will decode the file by an algorithm conforming to the same Standard.

If the memory 103 in the information recording/reproducing apparatus 1 is formed from a random-accessible semiconductor memory or disk memory, it will assure a merit of high-speed transfer. If the memory 103 is made of a non-volatile memory, no power supply is necessary for maintaining the integrity of information, so that the apparatus 1 can be designed more compact. A rewritable non-volatile memory such as a flash memory may be used to form the memory 103.

Note that in case the information recording/reproducing apparatus 1 is designed to have an appearance shown in FIG. 2, the function selector 101 is adapted to receive an information selected by the user of the apparatus 1 at a connector 212 or 211 by using either the function selectors 203 provided on the information recording apparatus 220 as shown in FIG. 2 or the output selectors 232 provided on the information provider apparatus 230 as shown in FIG. 3.

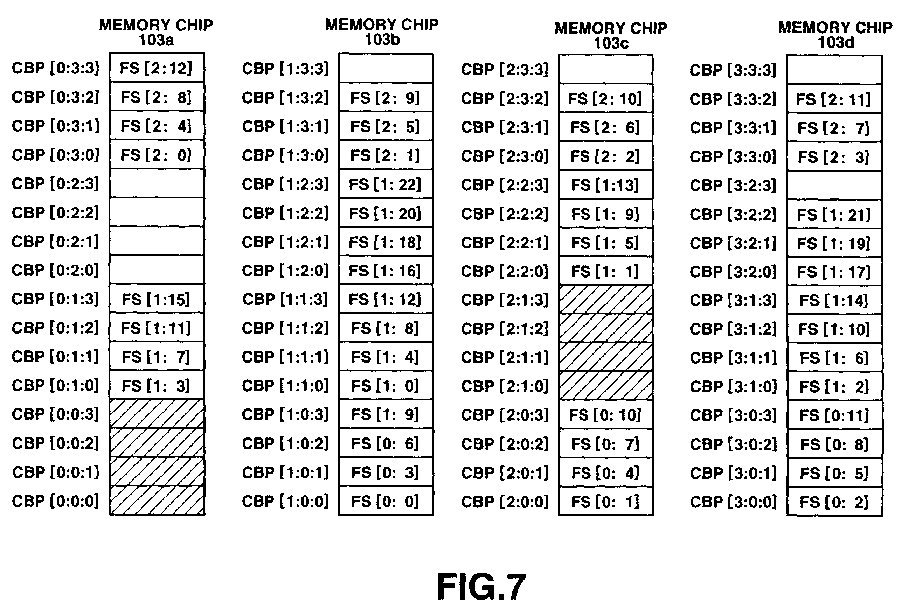

FIG. 7 shows an example of the recorded status of a file intended to solve the prior-art problem as shown in FIG. 5, and how to use a memory area with a higher flexibility and efficiency. It should be appreciated that a physical address in the memory 103 is represented by three units C (Chip), B (Block) and P (Page). The "C", "B" and "P" correspond to a memory chip No. c, block No. b being a minimum unit of data erasing, and to a page No. p being a minimum unit of data writing, respectively. Thus, one address in the memory is represented by CBP[c:b:p]. For better understanding of the correspondence with the FAT (File Allocation Table) file system, for example, the storage capacity per page is assumed to be 512 bytes, same as that of one sector adopted in the FAT system. Also, for identification of each data to be recorded into the memory, two units F (File) and S (Sector) will be used. The F and S correspond to a file No. f and a number s for each of sectors which form together a file, respectively. Thus, one data is represented by FS[f:s]. In this example, each of the memory chips C[0], C[1], C[2] and C[3] consists of four blocks B[0] to B[3] each of which consists of four pages P[0] to P[3]. As will be seen from FIG. 7, all files recorded vertically over four memory chips 103a, 103b, 103c and 103d are same in information (sector data) to each other except for their recorded locations. It should be appreciated that the hatched portions in the memory chips 103a and 103c shown in FIG. 7 are unusable blocks (invalid block) having taken place during manufacture of the memory chip or due to an excessive data rewrite, or blocks (system block) as system area, spare area, etc. where no files are to be written.

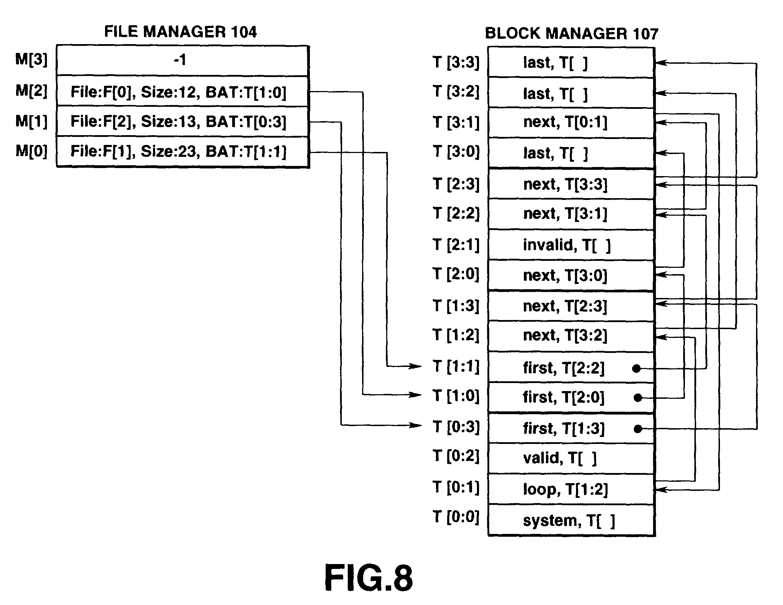

Examples of the file and block managers 104 and 107 for management of the memory 103, as shown in FIG. 7, are further shown in FIG. 8. The file manager 104 contains management information including, in units of a file, a file name (File), file size (Size), pointer (BAT) to the block manager 107, etc.

More specifically, the file manager 104 in FIG. 8 gives indications as follows. The memory 103 contains three files, and the logical order of the files is F[1], F[2] and F[0]. The files F[0], F[1] and F[2] have sizes for twelve sectors, twenty three sectors and thirteen sectors, respectively. Their respective leading blocks are CB[1:0], CB[1:1] and CB[0:3], respectively, corresponding to BAT entries T[1:0], T[1:1] and T[0:3], respectively, in the block manager 107. It should also be noted that a value "-1" written in the file manager 104 shown in FIG. 7 means an invalid file management data.

On the other hand, the block manager 107 has entries corresponding to all blocks included in the memory 103, and each entry has recorded therein management information such as status flag and linkage information for a corresponding block, in units of a block. For the block manager 107, a table composed of a group of such entries will be referred to as BAT (Block Allocation Table), and each of the entries forming a BAT will be called "BAT entry".

In the example shown in FIG. 7, the memory is formed from four memory chips each of which is composed of four blocks. Thus, a BAT in the block manager 107 shown in FIG. 8 has sixteen entries. An entry T[0:0] corresponds to a block B[0] in a memory chip 103a (C[0]), and entry T[0:1] corresponds to a block B[1] in the memory chip 103a (C[0]). Similarly, an entry T[1:0] corresponds to a block B[0] in a memory chip 103b (C[1]), entry T[2:0] corresponds to a block B[0] in a memory chip 103c (C[2]), entry T[3:0] corresponds to a block B[0] in a memory chip 103d (C[3]), and an entry T[3:3] corresponds to a block B[3] in the memory chip 103d (C[3]). In effect, a BAT entry T[c:b] corresponds to a block CB[c:b].

Status flags recorded in each BAT entry include a flag indicating that a corresponding block is empty (this block will be referred to as "valid flag" hereafter), a flag indicating that a corresponding block is an unusable one having previously been referred to (this flag will be referred to as "invalid flag" hereafter), a flag indicating that a corresponding block is a system block (this flag will be referred to as "system flag"hereafter), a flag indicating that a corresponding block is a leading one in a file (this flag will be referred to as "first flag" hereafter), a flag indicating that a corresponding block is an intermediate one in a file (this flag will be referred to as "next flag" hereafter), a flag indicating that a corresponding block is a last one in a file (this flag will be referred to as "last flag" hereafter), etc. As will be described in further detail later, the present invention uses a special status flag indicating that a corresponding block serves as an intermediate one and also as a last one in parallel control in file (this flag will be referred to as "loop flag" hereafter).

A linkage information which is recorded in each BAT entry is a one intended to represent a linked status of blocks forming together a file. When a next block to be linked exists in a file, a pointer to a BAT entry corresponding to the block is recorded into that entry. As a pointer to the entry T[2:0] is recorded as a linkage information in the entry T[1:0] and a pointer to the entry T[3:0] is recorded as a linkage information in the entry T[2:0], it can be known that blocks CB[1:0], CB[2:0] and CB[3:0] are linked in this order. Since these three entries have a first flag, next flag and last flag, respectively, it can be known that they form together a file.

The file can be known to be managed as a third file F[0] (M[2]) in the file manager 104 in practice. The file F[0] is recorded vertically over four blocks in the example shown in FIG. 5. However, it is recorded over three blocks in this example in FIG. 8. Further, when the block CB[0:0] is used as a system block in the example shown in FIG. 5, a file recorded over blocks CB[1:0], CB[2:0] and CB[3:0] cannot be managed. By introducing the block manager 107 shown in FIG. 8, only the block CB[0:0] can be identified as a system block and allowed to manage files over the above three blocks.

Similarly, the file F[1] can be known to be recorded as follows. Since it is known from the file manager 104 that the leading BAT entry is T[1:1], it can be judged from the block manager 107 that the group of entries related to the file F[1] is a group of six BAT entries linked in the order of an entry T[1:1] for which a first flag is set, T[2:2] for which a next flag is set, T[3:1] , T[0:1] for which a loop flag is set, T[1:2] for which a next flag is set, and T[3:2] for which a last flag is set.

Therefore, the file F[1] can be known to be composed of blocks CB[1:1], CB[2:2], CB[3:1], CB[0:1], CB[1:2] and CB[3:2] in this order. Further, it is assumed here that a group of blocks subject to the aforementioned parallel control is called a parallel block. Then, it can be known from the example shown in FIG. 7 that the file F[1] is composed of a first parallel block including four blocks CB[1:1], CB[2:2], CB[3:1] and CB[0:1] and a second parallel block including two blocks CB[1:2] and CB[3:2].

To indicate in the block manager 107 that the file F[1] is composed of the two parallel blocks, a loop flag is recorded as a status flag for a BAT entry T[0:1] corresponding to the last block CB[0:1] in the first parallel block. Also, to indicate that the last block in the second parallel block is also the last one in the file F[1], a last flag is recorded as a status flag for the BAT entry T[3:2]. More specifically, the first flag has a similar meaning to that of the next flag and also indicates a leading block in the file, and the last flag has a similar meaning to that of the loop flag and also indicates a last block in the file.

The most important characteristic of the present Invention is that on the assumption that a minimum unit of memory management is a block and a minimum unit of data writing is a page, a plurality of memory chips can be flexibly controlled in parallel and a memory area can be used effectively and efficiently, by providing as a new unit a parallel block including an arbitrary number of blocks in case a block is composed of a plurality of pages.

Namely, the file F[1] is recorded vertically over eight blocks in the example shown in FIG. 5. According to the present invention, the file is recorded vertically over six blocks as in the example shown in FIG. 8. Further, if the block CB[2:1] is an invalid one in the example shown in FIG. 5, files recorded over the blocks CB[0:1], CB[1:1] and CB[3:1] cannot be managed. According to the present invention, however, the four blocks CB[0:1], CB[1:1], CB[3:1] and CB[2:2] for the invalid block CB[2:1] can be made parallel to each other by introducing the block manager 107 in the information recording/reproducing apparatus 1 according to the present invention.

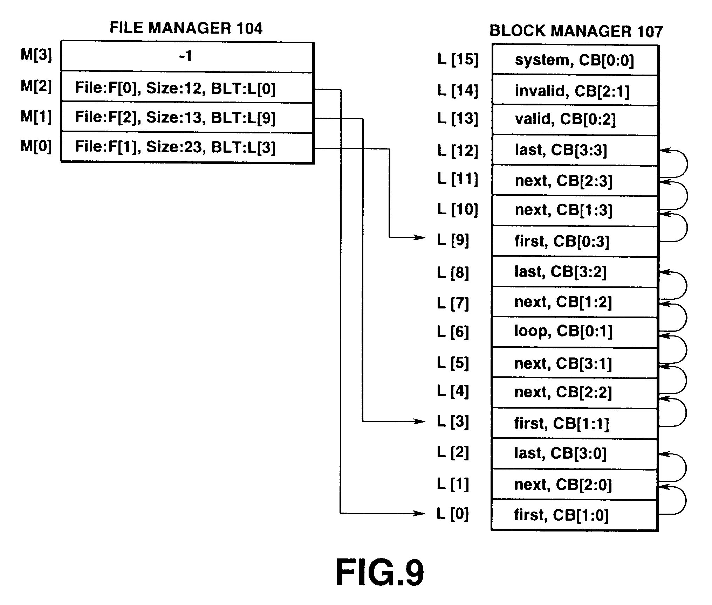

FIG. 9 explains other examples of the file and block managers 104 and 107. The file manager 104 has recorded therein a management information including a file name (File), file size (Size), a pointer (BLT) to the block manager 107, etc. in units of a file.

More specifically, the file manager 104 in FIG. 9 gives indications as follows. The memory 103 contains three files, and the logical order of the files is F[1], F[2] and F[0]. The files F[0], F(1) and F[2] have sizes for twelve sectors, twenty three sectors and thirteen sectors, respectively. The leading blocks are CB[1:0], CB[1:1] and CB[0:3], respectively, written in BLT entries L[0], L[3] and L[9] in the block manager 107. It should also be noted that a value "-1" written in the file manager 104 as shown in FIG. 9 means an invalid file management data.

On the other hand, the linked status of blocks composing each file is written in a different manner in the block manager 107 in FIG. 9 from in FIG. 8. More specifically, the block manager 107 has as many entries as all blocks included in the memory 103. Each of the entries has written therein a block address CB[c:b] as an address information, and a succession of entries indicates directly a linked status. The entries are used in connection with a status flag written in each entry to manage each block. In the block manager 107, a table composed of the group of entries will be referred to as "BLT (Block Link Table)" and each of the entries composing a BLT is as "BLT entry". In the example shown in FIG. 7, the memory is formed from four memory chips and each memory chip is composed of four blocks. Thus, it will be known from FIG. 9 that a BLT of the block manager 107 has sixteen entries.

As in the example shown in FIG. 8, status flags recorded in each BLT entry include a flag indicating that a corresponding block is empty or usable (this block will be referred to as "valid flag" hereafter), a flag indicating that a corresponding block is an unusable one having previously referred to (this flag will be referred to as "invalid flag" hereafter), a flag indicating that a corresponding block is a system block (this flag will be referred to as "system flag"hereafter), a flag indicating that a corresponding block is a leading one in a file (this flag will be referred to as "first flag" hereafter), a flag indicating that a corresponding block is an intermediate one in a file (this flag will be referred to as "next flag" hereafter), a flag indicating that a corresponding block is a last one in a file (this flag will be referred to as "last flag" hereafter), etc. As will be described in further detail later, the present invention uses a special status flag indicating that a corresponding block is an intermediate one and also a last one in parallel control in file (this flag will be referred to as "loop flag" hereafter).

An address information which is recorded in each BLT entry is a one intended to represent a linked status of blocks composing a file. For example, a block address CB[1:0] is recorded in an entry L[0] and CB[2:0] is in a following entry L[1] and CB[3:0] is in a next entry L[2]. Thus, it can be known that blocks are linked in the order of CB[1:0], CB[2:0] and CB[3:0]. Since these three entries have a first flag, next flag and last flag, respectively, as status flags, it can be known that they form together a file. The file can be known to be managed as a third file F[0] (M[2]) in the file manager 104 in practice.

Similarly, the file F[1] can be known to be recorded as follows. Since it is known from the file manager 104 that the leading BLT entry is L[3], it can be judged from the block manager 107 that the group of entries related to the file F[1] is a group of six BLT entries linked in the order of an entry L[3] for which a first flag is set, L[4] for which a next flag is set, L[5] , L[6] for which a loop flag is set, L[7] for which a next flag is set, and L[8] for which a last flag is set.

Therefore, the file F[1] can be known to be composed of blocks CB[1:1], CB[2:2], CB[3:1], CB[0:1], CB[1:2] and CB[3:2] in this order. Further, it is known from the loop flag that the file F[1] is composed of a first parallel block including four blocks CB[1:1], CB[2:2], CB[3:1] and CB[0:1] and a second parallel block including two blocks CB[1:2] and CB[3:2].

Namely, to indicate in the block manager 107 that the file F[1] is composed of the two parallel blocks, a loop flag is recorded as a status flag for a BLT entry L[6] corresponding to the last block CB[0:1] in the first parallel block. Also, to indicate that the last block in the second parallel block is also the last one in the file F[1], a last flag is recorded as a status flag for the BLT entry L[8].

Also, block management information including an information that a block is a system block, invalid block or any other may be recorded in arbitrary entry, and their attributes can be judged based on its status flag such as system flag, invalid flag, etc.

Use of the block manager 107 as shown in FIG. 9 is advantageous in that random access to inside a file, etc. can easily be controlled because the linked status of blocks forming together the file is written with a succession of groups of BLT entries punctuated by first and last flags as status flags. More specifically, address values L[0] to L[15] of BLT entries can be used to calculate directly a positional relation between a block being reproduced and a block to which the reproduction control is to be passed.

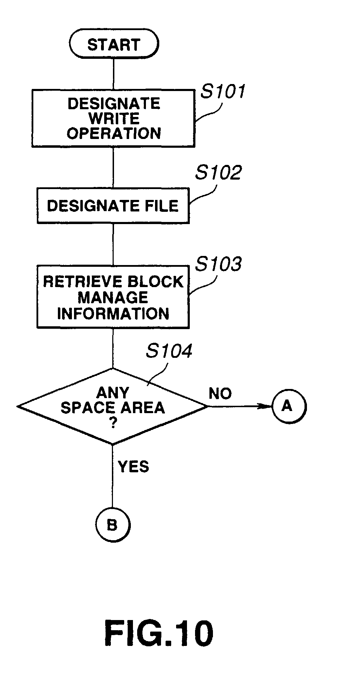

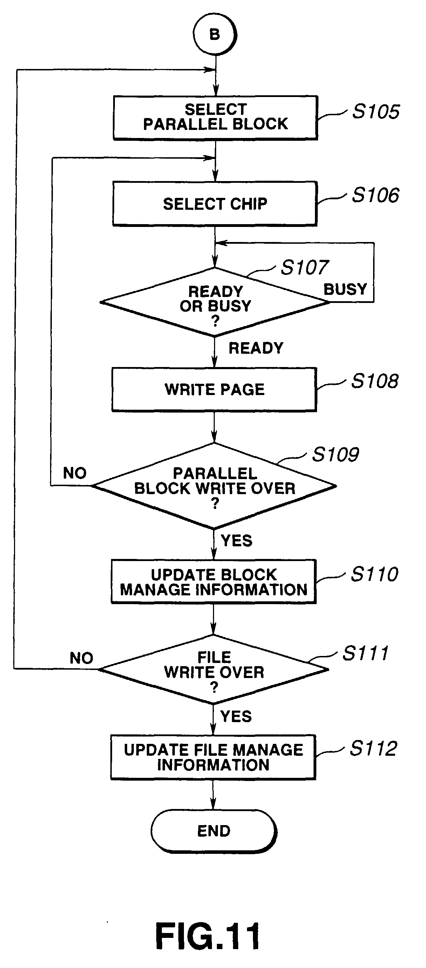

FIGS. 10 and 11 show together a flow chart of operations to be done by the information recording/reproducing apparatus 1 when an operation for file transfer is designed by the function selector 101.

First at a step S101 in FIG. 10, the memory controller 102 recognizes that data transferred from the transfer controller 105 should be written into the memory 103. At a next step S102, an information on a file to be written following the operation by the user of the information recording/reproducing apparatus 1, for example, designated information including a file name, size, etc., are entered. Information items are designated according to information previously transferred from the previously mentioned information provider apparatus, but the designation may be done at an information provider apparatus connected to the transfer input/output terminal 11 of the apparatus 1.

At a next step S103, the block manager 107 is used to search a space area in the memory 103. When it is decided at a further step S104 that a sufficient space area for write of a file is available in the memory 103 (Yes), write of the file into the memory 103 will be started at a next step S105 shown in FIG. 11.

On the other hand, when it is determined at the step S104 that there is no sufficient space area for write of the file (No), a block erasure which will be described later is done to obtain a space area, and then write of the file will be started at the step S105 as shown in FIG. 11. Since it is possible to calculate the total size of files recorded in the memory 103 based on the standing status of the file manager 104, it is easy to judge whether there is a space area available in the memory 103. Files to be erased for obtaining of a space area may be the timewise or logically oldest ones but may be selected by the function selector 101 operated by the user of the apparatus 1.

At the step S105 in FIG. 11, the space area searched at the Step S103 as shown in FIG. 10 is used to form a parallel block. To effectively utilize the above-mentioned merits of the parallel control, however, one parallel block should desirably be composed of different memory chips if possible as shown in FIG. 7. Of course, the memory chips may be arranged in an arbitrary order as shown in FIG. 7.

At a step S106, a chip select signal is entered for a memory chip to which the file is to be written. A memory chip is regularly selected in an order corresponding to the order of the blocks included in the parallel block selected at the step S105 and the file is written into the memory chip. At a step S107, it is checked as a status information of the memory chip selected at the preceding step S106 whether the memory chip is Ready or Busy. At this step S107, the apparatus 1 will wait until the memory chip becomes Ready. A memory chip first selected after the file write is started is normally Ready. However, if the operation goes to an erasure (No) at the step S104, the memory chip is not ready (Busy) because it is being erased, in some cases.

At the step S107, when the memory chip is determined to be Ready, write of sector data is started at a next step S108 in the wiring procedure having been previously described. The write will always be started at the leading address. This is also true when a file is written over a plurality of blocks. Of course, when write is being done from the internal register of the memory chip into a memory cell, the operation can proceed to a next step without waiting until the write is complete.

At a next step S109, it is judged whether write of all the sector data into the parallel blocks selected at the step S105 is complete. If the write is not yet complete (No), a similar operation will be repeated for another memory chip at the step S106. On the other hand, if it is determined that the write into the parallel block is complete (Yes), the operation goes to a next step S110 where the management information on the written parallel block is updated and stored into the block manager 107.

At a next step S111, it is judged whether write to all the blocks included in the parallel block forming together a file is complete. If not (No), a similar operation will be repeated for another parallel block at the step S105. On the other hand, if it is determined that the file write is complete (Yes), the operation goes to a next step S112 where the management information on the written file is updated and stored into the file manager 104. Then, the apparatus 1 will quit the file transfer operation.

Of course, the updating of the block management information at the step S110 can be done at a higher data transfer rate by finally effecting the updating and the operation at the step S112 at a same time.

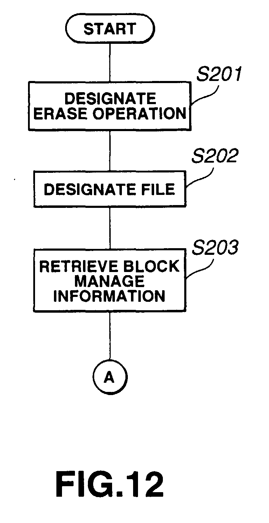

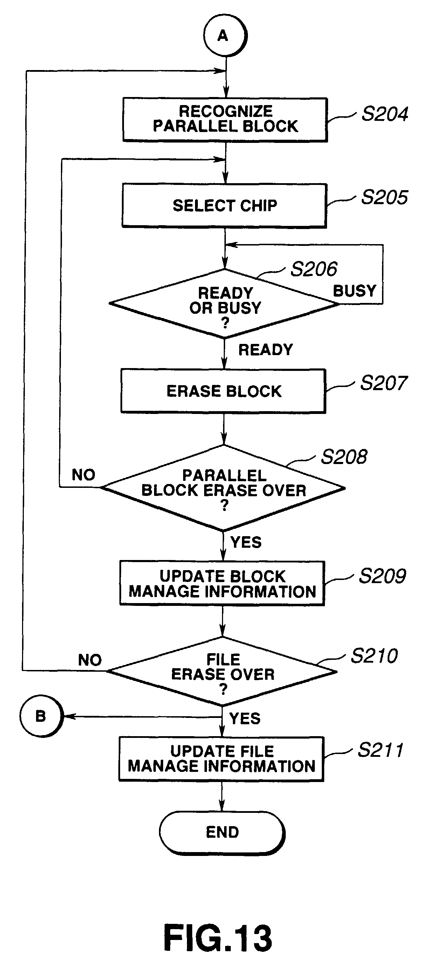

FIGS. 12 and 13 illustrate together a flow chart of the operations done by the information recording/reproducing apparatus 1 when a file erase is designated by the user of the apparatus 1 using the function selector 101.

First at a step S201, the memory controller 102 will recognize that a file to be designated at a next step S202 is going to be erased. At the step S202, information on the to-be-erased file such as its name, etc. designated correspondingly to the operation of the apparatus 1 by the user is entered. At a next step S203, the memory controller 102 will retrieve the designated file by means of the file and block managers 104 and 107.

At a next step S204, a parallel block is recognized based on the block management information retrieved at a next step S203. At a further step S205, memory chips are regularly selected and erased in an order corresponding to the order of blocks in the parallel block recognized at Step S204. Also, its should be noted that even when it is determined at the step S104 where the write is done as shown in FIG. 10 that there is not available in the memory 103 a space area for write of the file (No), the operation goes from the step 104 to the step S204 where the file will be erased.

At a step S206, it is checked as a status information of the memory chip selected at the preceding step S205 whether the memory chip is Ready or Busy. At this step S206, the apparatus 1 will wait until the memory chip becomes Ready. A memory chip first selected after the file erase is started is normally Ready.

At the step S206, when it is determined that the memory chip is Ready, a block will be erased at a next step S207. First, a block erase set-up command, address of a block to be erased and an erase command are entered in this order for a memory chip selected at the step S205. In a predetermined time, the erasure of the designated block will be complete. Of course, during the block erasure, the operation may proceed to a next Step without waiting until the erasure is complete.

At a next step S208, it is judged whether erasure of all blocks composing the parallel block selected at the step S204 is complete. If not (No), a similar operation will be repeated for another memory chip from the step S205. On the other hand, if it is determined that the parallel block erasure is complete (Yes), a management information on the erased parallel block will be updated and recorded in the block manager 107 at a next step S209. That is, the entry of the block manager 107 corresponding to the erased block is updated to a valid flag.

At a further step S210, it is judged whether erasure of all the blocks included in the parallel block forming together a file is complete. If not (No), a similar operation will be repeated for another memory chip from the step S204. On the other hand, when it is determined that the file erase is complete (Yes), a management information on the erased file is deleted from the file manager 104 at a next step S211 and the file erase operation will be terminated. However, if the operation goes to the step S204 in the course of the writing shown in FIG. 10, no operation will be done at the step S211 but the operation will return to the step S105 where the write operation will be continued as shown in FIG. 11.

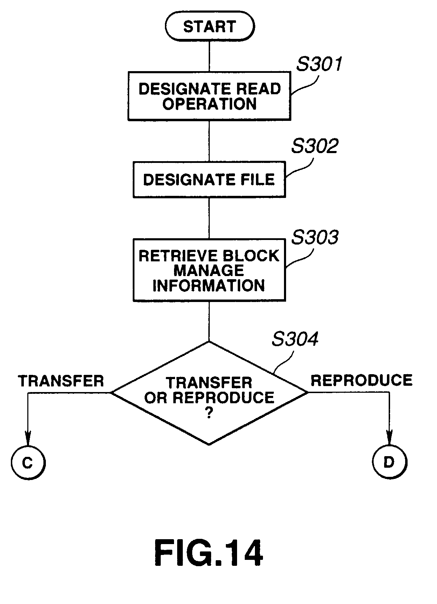

FIGS. 14, 15 and 16 illustrate together a flow chart of the operations done by the information recording/reproducing apparatus 1 when file read is designated by the user using the function selector 101.

The information recording/reproducing apparatus 1 will first recognize at a step S301 that read from a file which will be designated at a next step S302 is going to be done. At the step S302, information on the file to be read for transfer or reproduction such as its name, etc. designated correspondingly to the operation by the user of the apparatus 1 are entered. At a further step S303, management information on the designated file such as its address, size, etc. in the memory 103 are retrieved from the file and block managers 104 and 107, and file read will be effected according to the management information at a next step S304 and subsequent Steps.

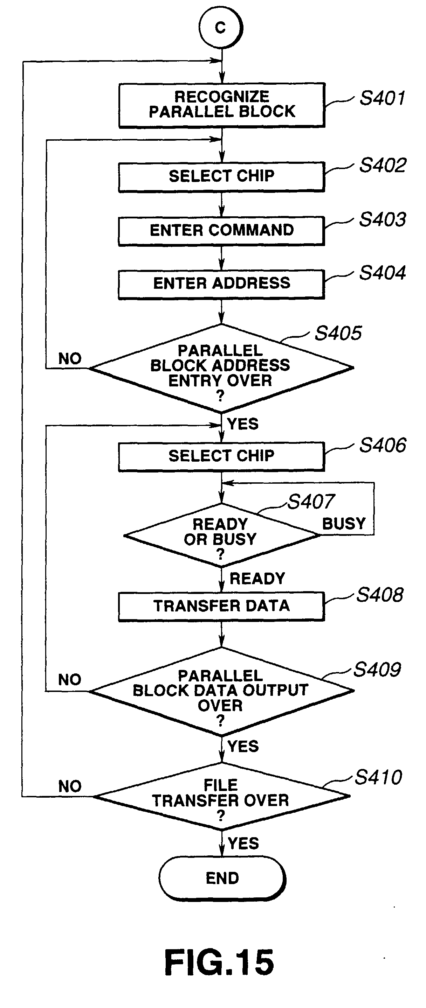

At the step S304, it is judged whether transfer or reproduction is designated by the user using the function selector 101. When it is determined that transfer is designated, the operation goes to a step S401 as shown in FIG. 15. On the other hand, when reproduction is designated, the operation goes to a step S501 as shown in FG. 16.

For reading operation for transfer, the operation goes from the step S304 to the step S401 as shown in FIG. 15 where a parallel block will be recognized based on the block management information retrieved at the step S303.

At a next step S402, a chip select signal is entered for a memory chip from which a read is to be done. At this Step, memory chips are regularly selected in an order corresponding to the order of blocks in the parallel block recognized at the step S401, and read operation is effected. At Steps S403 and S404, a page read command and an address from which read is to be done are sequentially entered for the memory chips selected at the step S402. At the step S405, it is judged whether entry of the command and addresses for all the memory chips forming the parallel block is complete. If it is determined that entry of the command and address is not complete (No), the entry of the command and addresses into another memory chip is repeated from Step S402 for all the memory chips composing the parallel block until the entry is complete (Yes).

In a predetermined time after the operations at the steps S402 to S405 are repeated, all the memory chips forming together the parallel block will hold in the internal registers thereof sector data read from the memory cells. Therefore, it is possible to successively read these sector data from the internal registers at a step S406 and subsequent steps. In this way, the time for reading sector data from the memory cells and internal register of each memory chip can be shared effectively, so that a read can be done with a small overhead.

At the step S406, the memory chips first selected at the step S402 is selected again, and it is checked as a status information of the memory chip already selected whether the memory chip is Ready or Busy. When the memory chip is determined to be Busy, the operations will stand at a next step S407. On the other hand, if the memory chip is decided to be Ready, the operation goes to a further step S408 where sector data held in the internal register of the memory chip is read and transferred to the transfer controller 105.

For all the memory chips having been processed at the steps S402 to S404, the operations at the steps S406 to S408 are effected in the order in which the command has been entered into the memory chips. The flow of these operations will be controlled at a next step S409 where it is judged whether transfer of all sector data recorded in the parallel block is complete. If not (No), a similar operation is repeated for a next memory chip from the step S406. On the other hand, if the transfer is complete (Yes), the operation goes to a next step S410.

At the step S410, it is judged whether read of sector data from all the blocks included in the parallel block forming together a file is complete. If not (No), the operation goes back to the step S401 where a similar operation will be repeated for a next parallel block. On the other hand, when it is determined at the step S410 that file read is complete (Yes), the above file reading operation will be terminated.

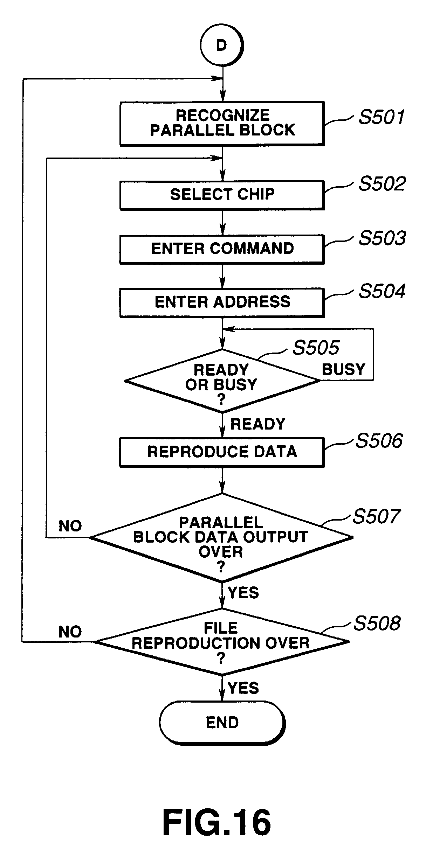

On the other hand, if reproduction is designated, the operation goes from the step S304 as shown in FIG. 14 to a step S501 shown in FIG. 16 where a parallel block is recognized based on the block management information retrieved at the step S303.

At a next step S502, a chip select signal is entered for memory chips from which read is to be done. At this Step, memory chips are regularly selected in an order corresponding to the order of the blocks included in the parallel block recognized at the step S501, and reading is done from the memory chips. At steps S503 and S504, a page read command and an address from which read is to be done will be entered for the memory chips selected at the step S502. At a next step S505, it is checked as a status information of the memory chips selected at the preceding step the step S502 whether the memory chips are Ready or Busy. If the memory chips are determined to be Busy, the operation will stand at this step S505. On the other hand, when it is determined that the memory chips are Ready, the operation goes to a next step S506 where sector data held in the internal registers of the memory chips are read and transferred to the reproduction controller 106.

At a next step S507, it is judged whether reproduction of all the sector data recorded in the blocks included in the parallel block is complete. If the reproduction is not yet complete (No), a similar operation will be repeated for a next memory chip from the step S502. On the other hand, when it is determined that the reproduction is complete (Yes), the operation will go to a next step S508.

At the step S508, it is judged whether reading of sector data from all the blocks included in the parallel block forming together the file is complete. If not (No), the operation goes back to the step S501 where a similar operation will be repeated for a next block included in the parallel block. On the other hand, when it is decided that the file reading is complete at this step S508 (Yes), the above file reading is terminated.

In the reproduction, the total time for data reading is longer than required for the data reading for transfer at the steps S401 to S410 in which entry of a command and address is done separately from the data output, because the operations in the steps S502 to S506 are effected for each memory chip. However, no plurality of memory chips is actuated at a same time and thus the apparatus will not consume the power so much in this case. This feature of the present invention is very convenient in case the apparatus according to the present invention is used for a real-time reproduction of sounds which needs no high speed of data reading.

In the foregoing, the present invention has been described concerning an embodiment in which a semiconductor memory is adopted as the memory 103. It should be noted, however, that the memory may be a magneto-optic disk or magnetic disk. In this case, the memory controller 102 will be a drive unit for such a disk.

Also, it should be noted that the apparatus according to the present invention is used by the user as an apparatus dedicated for data reproduction, and that the memory 103 may be formed from a read-only memory such as an optical disk or ROM.

## Claims

1. An information recording apparatus, comprising:
a recording means in which information can be recorded;
a file managing means of managing, in units of a file, the information recorded in the recording medium;
a block managing means of managing the files in units of a `predetermined block including a plurality of units of writing; and
a controlling means of writing information into the recording means in units of a parallel block including an arbitrary number of the predetermined blocks, setting a file management information into the file managing means, and setting in the block managing means a block management information including a flag indicating a punctuation between the blocks included in the parallel block.

2. The apparatus as set forth in Claim 1, further comprising:
a transfer terminal for connection of an external apparatus; and
a transfer means for transfer of a file entered from the transfer terminal to the controlling means.

3. The apparatus as set forth in Claim 1, wherein the file managing means is adapted to manage a pointer to the block managing means in addition to the file management information including at least a file name and file size.

4. The apparatus as set forth in Claim 3, wherein the block managing means has an entry corresponding to each of the blocks in the recording means and manages for the entry a block management information including at least a block attribute information and block address information.

5. The apparatus as set forth in Claim 3, wherein the block managing means has an entry corresponding to each of the blocks in the recording means and manages for the entry a block management information including at least a block attribute information and inter-entry linkage information.

6. The apparatus as set forth in Claim 4, wherein the flag indicative of a punctuation between the parallel blocks is included in the attribute information.

7. The apparatus as set forth in Claim 5, wherein the flag indicative of a punctuation between the parallel blocks is included in the attribute information.

8. The apparatus as set forth in Claim 4, wherein the attribute information includes a flag indicating whether data in a block corresponding to the entry is valid.

9. The apparatus as set forth in Claim 5, wherein the attribute information includes a flag indicating whether data in a block corresponding to the entry is valid.

10. The apparatus as set forth in Claim 4, wherein the attribute information includes a flag indicating whether data in a block corresponding to the entry is rewritable.

11. The apparatus as set forth in Claim 5, wherein the attribute information includes a flag indicating whether data in a block corresponding to the entry is rewritable.

12. The apparatus as set forth in Claim 1, wherein:
the recording means is formed from a plurality of recording medium chips;
the parallel block includes blocks in different recording medium chips; and
the controlling means effects parallel writing into the parallel block.

13. The apparatus as set forth in Claim 1, wherein the block is a unit of erasing in the recording means.

14. The apparatus as set forth in Claim 1, wherein the recording means is a semiconductor memory.

15. The apparatus as set forth in Claim 1, wherein the recording means is a magneto-optic disk or optical disk.

16. An information recording method, comprising the steps of:
writing information into a recording means in units of a parallel block including a plurality of blocks;
setting into a file managing means a file management information under which the information recorded in the recording means is to be managed in units of a file; and
setting in a block managing means a block management information including a flag indicative of a punctuation between the blocks included in the parallel block and under which the files are to be managed in a predetermined block including a plurality of units of writing.

17. The method as set forth in Claim 16, wherein at the file managing step, a pointer to the block managing means is set in addition to the file management information including at least a file name and file size.

18. The method as set forth in Claim 17, wherein at the block managing step, a block management information including at least a block attribute information and block address information is set in an entry of the block managing means, corresponding to each of the blocks in the recording means.

19. The method as set forth in Claim 17, wherein at the block managing step, a block management information including at least a block attribute information and inter-entry linkage information is set in an entry of the block managing means, corresponding to each of the blocks in the recording means.

20. The method as set forth in Claim 18, wherein the flag indicative of the punctuation between the blocks included in the parallel block is included in the attribute information.

21. The method as set forth in Claim 19, wherein the flag indicative of the punctuation between the blocks included in the parallel block is included in the attribute information.

22. The method as set forth in Claim 18, wherein the attribute information includes a flag indicating whether data in a block corresponding to the entry is valid.

23. The method as set forth in Claim 19, wherein the attribute information includes a flag indicating whether data in a block corresponding to the entry is valid.

24. The method as set forth in Claim 18, wherein the attribute information includes a flag indicating whether data in a block corresponding to the entry is rewritable.

25. The method as set forth in Claim 19, wherein the attribute information includes a flag indicating whether data in a block corresponding to the entry is rewritable.

26. The method as set forth in Claim 16, wherein the parallel block includes blocks in different recording medium chips of the recording means which is formed from a plurality of recording medium chips, and wherein at the information recording step, parallel writing is effected into the parallel blocks.

27. The method as set forth in Claim 16, wherein the block is a unit of erasing in the recording means.

28. An information reproducing apparatus, comprising:
a recording means in which information is recorded;
a file managing means of managing, in units of a file, the information recorded in the recording medium;
a block managing means of managing the files in units of a predetermined block including a plurality of units of reading; and
a controlling means for reading information from the recording means on the basis of the file and block managing means and in units of a parallel block including an arbitrary number of the predetermined blocks .

29. The apparatus as set forth in Claim 28, further comprising:
a reproducing means of reproducing the information read by the controlling means from the recording means; and
an output terminal for delivering data in the reproduced file to outside.

30. The apparatus as set forth in Claim 28, wherein the file managing means is adapted to manage a pointer to the block managing means in addition to the file management information including at least a file name and file size.

31. The apparatus as set forth in Claim 30, wherein the block managing means has an entry corresponding to each block in the recording means and manages for the entry a block management information including at least a block attribute information and block address information.

32. The apparatus as set forth in Claim 30, wherein the block managing means has an entry corresponding to each block in the recording means and manages for the entry a block management information including at least a block attribute information and inter-entry linkage information.

33. The apparatus as set forth in Claim 31, wherein the flag indicative of a punctuation between the parallel blocks is included in the attribute information.

34. The apparatus as set forth in Claim 32, wherein the flag indicative of a punctuation between the parallel blocks is included in the attribute information.

35. The apparatus as set forth in Claim 31, wherein the attribute information includes a flag indicating whether data in a block corresponding to the entry is valid.

36. The apparatus as set forth in Claim 32, wherein the attribute information includes a flag indicating whether data in a block corresponding to the entry is valid.

37. The apparatus as set forth in Claim 31, wherein the attribute information includes a flag indicating whether data in a block corresponding to the entry is rewritable.

38. The apparatus as set forth in Claim 32, wherein the attribute information includes a flag indicating whether data in a block corresponding to the entry is rewritable.

39. The apparatus as set forth in Claim 28, wherein:
the recording means is formed from a plurality of recording medium chips;
the parallel block includes blocks in different recording medium chips; and
the controlling means effects parallel writing into the parallel blocks.

40. The apparatus as set forth in Claim 28, wherein the block is a unit of erasing in the recording means.

41. The apparatus as set forth in Claim 28, wherein the recording means is a read-only recording medium.

42. The apparatus as set forth in Claim 28, wherein the recording means is a semiconductor memory.

43. The apparatus as set forth in Claim 28, wherein the recording means is a magneto-optic disk or optical disk.

44. An information reproducing method, comprising the steps of:
recognizing a file management information under which information recorded in a recording means is to be managed in units of a file;
recognizing a block management information including a flag indicative of a punctuation between the parallel blocks and under which the files are to be managed in units of a predetermined block including a plurality of units of writing; and
reading information from the recording means in units of a parallel block including an arbitrary number of the predetermined blocks.

45. The method as set forth in Claim 44, further comprising the steps of:
reproducing the information read from the recording means at the information reading step; and
delivering data in the reproduced file to outside.

46. The method as set forth in Claim 44, wherein at the file managing step, a pointer to the block managing means is recognized in addition to the file management information including at least a file name and file size.

47. The method as set forth in Claim 46, wherein at the block managing step, a block management information including at least a block attribute information and block address information is recognized.

48. The method as set forth in Claim 46, wherein at the block managing step, a block management information including at least a block attribute information and inter-entry linkage information is recognized.

49. The method as set forth in Claim 47, wherein the flag indicative of a punctuation between the blocks included in the parallel block is included in the attribute information.

50. The method as set forth in Claim 48, wherein the flag indicative of a punctuation between the blocks included in the parallel block is included in the attribute information.

51. The method as set forth in Claim 47, wherein the attribute information includes a flag indicating whether data in a block corresponding to the entry is valid.

52. The method as set forth in Claim 48, wherein the attribute information includes a flag indicating whether data in a block corresponding to the entry is valid.

53. The method as set forth in Claim 47, wherein the attribute information includes a flag indicating whether data in a block corresponding to the entry is rewritable.

54. The method as set forth in Claim 48, wherein the attribute information includes a flag indicating whether data in a block corresponding to the entry is rewritable.

55. The method as set forth in Claim 44, wherein the parallel block includes blocks in different recording medium chips of the recording means formed from a plurality of recording medium chips, and wherein at the information recording step, parallel reading is effected from the parallel blocks.

56. The method as set forth in Claim 44, wherein the block is a unit of erasing in the recording means.
